# EUROPÄISCHE PATENTSCHRIFT

(11) **EP 2 042 448 B1**
(45) Veröffentlichungstag und Bekanntmachung des Hinweises auf die Patenterteilung: **22.06.2011**
(21) Anmeldenummer: 08165326.3
(22) Anmeldetag: 26.09.2008
(51) Int. Cl.: B65G 1/137, B65G 47/90

(54) **Lagersystem mit einem Greifsystem**
Storage system with a grip system
Système de stockage avec un système de saisie

(30) Priorität: 26.09.2007 AT 15202007
(43) Veröffentlichungstag der Anmeldung: 01.04.2009
(73) Patentinhaber: Metall- und Kunststoffwaren Erzeugungsgesellschaft m.b.H., 3860 Heidenreichstein (AT)
(72) Erfinder: Poinstingl, Erwin, Ing., 3860 Heidenreichstein (AT)
(74) Vertreter: Müllner, Martin

(56) Entgegenhaltungen:
- EP-A- 0 620 528
- EP-A- 1 273 531
- AT-U1- 6 251
- DE-A1- 3 632 448
- DE-A1- 3 836 439
- DE-A1- 3 910 801

## Beschreibung

### Technisches Gebiet

Die Erfindung bezieht sich auf ein Lagersystem nach dem Oberbegriff des Anspruchs 1. Das Lagersystem kann insbesondere ein Apotheken-Lagersystem sein.

### Stand der Technik

Bei bekannten derartigen Lagersystemen, wie z.B. jenem nach AT 6251 U , sind Greifer mit Saugköpfen vorgesehen, die die aus einem Bereich eines Lagers zu entnehmenden Gegenstände ansaugen, anheben und wegtransportieren. Dies kann z.B. mittels eines Knickarm-Roboters oder eines Scara-Roboters erfolgen.

Scara ist die Abkürzung von "Selective-Compliance Assembly Robot Arms" und bezeichnet einen Roboterarm, der in drei Richtungen Translationsbewegungen durchführen kann und außerdem noch eine Rotationsbewegung ausführen kann - also genau wie die menschliche Hand. Solch ein Scara-Roboter wird normalerweise von vier Motoren gesteuert.

Bei dieser bekannten Lösung ergibt sich der Nachteil, dass ein Greifer mit einem Saugkopf nur Gegenstände sicher fassen kann, die eine ebene Oberfläche aufweisen. Kleine Schachteln, wie z.B. Medikamentenpackungen, weisen aber oft ungenau gefaltete Seitenwände auf. Manchmal sind die Seitenwände sogar mit Absicht bombiert. Schließlich kommt es sogar vor, dass die Höhe der Schmalseite geringer ist als der Durchmesser des Saugkopfes. Da aus Platzgründen Medikamentenschachteln meist auf der Schmalseite angesaugt werden müssen, lassen sich solche Gegenstände mit Saugköpfen nur unsicher erfassen. In einem solchen Fall strömt Luft in den Saugkopf, wodurch die Haltekraft des Saugkopfes stark abnimmt. Ein sicheres Halten ist in einem solchen Fall nur durch eine sehr erhebliche Saugleistung des Saugkopfes zu erreichen. Dies erfordert aber einen sehr erheblichen Energieeinsatz.

Es sind natürlich auch schon Greifer bekannt, die den zu greifenden Gegenstand zwischen zwei Backen festklemmen. Wie im Rahmen der vorliegenden Erfindung festgestellt wurde, sind solche Greifer für Apotheken-Lagersysteme nur bedingt geeignet, weil dort stark unterschiedlich große und schwere Gegenstände gegriffen werden müssen: von Augentropfen, die nur einige Milliliter enthalten, bis zu Badezusätzen, die mehrere Liter enthalten können. Wenn die Klemmkraft ausreicht, um die schwersten Gegenstände sicher zu greifen und schnell zu bewegen, werden die (idR sehr dünnen) Verpackungen leichter Gegenstände oft schon zerquetscht, was natürlich hässlich aussieht und beim Verkauf von Arzneimitteln nicht gut wirkt.

Zu beachten ist dabei, dass meist nicht das Anheben des Gegenstands das Problem ist, sondern die nachfolgenden Bewegungen des Roboter-Arms, während deren der Gegenstand immer noch klemmend gehalten ist. Man möchte natürlich - da der Kunde auf das Medikament wartet - die Zugriffszeiten bei der Entnahme der Gegenstände aus dem Lager möglichst kurz halten - d.h. die Bewegungen möglichst schnell ausführen. Damit wirken relativ große Beschleunigungskräfte auf die Gegenstände, was dazu führen kann, dass diese aus den Backen herausgeschleudert werden.

Aus der DE 3910801 A ist ein Lagersystem nach dem Oberbegriff des Anspruchs 1 und ein Greifarm bekannt, der zwei gegeneinander verschiebbare Backen aufweist, die mittels eines Elektromotors bewegbar sind, und wobei der Elektromotor zur Festlegung der maximalen Greifkraft über einen Strombegrenzer ansteuerbar ist. Je nach Größe des durch den Strombegrenzer vorgegebenen maximalen Stroms ergibt sich eine bestimmte Klemmkraft. In dieser Schrift ist als Vorteil angeführt, dass auf ein aufwendiges Kraftmesssystem (Wägesystem) zur Greifkratmessung verzichtet werden kann. Demnach muss gemäß dieser Schrift die Greifkraft (der durch den Strombegrenzer vorgegebene maximale Strom) wohl anhand der Dicke des Gegenstandes, die durch das vorgesehene inkrementale Wegmesssystem erfasst werden kann, festgelegt werden.

Dies ist aber insofern nicht günstig, als die Dicke des Gegenstandes nicht unbedingt mit dem Gewicht korrelieren muss. Würde man aber ein Wägesystem in den Greifer integrieren, so müsste der Gegenstand zunächst vorsichtig (und daher langsam) angehoben und gewogen werden, bevor der Greifer mit der optimalen Kraft beaufschlagt und schnell bewegt werden kann. Dadurch verliert man natürlich entsprechend Zeit.

### Darstellung der Erfindung

Ziel der Erfindung ist es, diesen Nachteil zu vermeiden und ein Lagersystem der eingangs erwähnten Art vorzuschlagen, das es ermöglicht, beliebige eingelagerte Gegenstände sicher zu erfassen und schnell zu bewegen, ohne dass ein größerer Energieeinsatz erforderlich ist und ohne dass Gegenstände beschädigt werden.

Erfindungsgemäß wird dies bei einem Lagersystem der eingangs erwähnten Art durch die kennzeichnenden Merkmale des Anspruchs 1 erreicht.

Durch die vorgeschlagenen Maßnahmen ist sichergestellt, dass ein beliebiger Gegenstand, der sich an einem vorbestimmten Ort des Lagersystems befindet, zwischen den Backen des Greifers sicher gegriffen und danach sofort mit optimaler Geschwindigkeit bewegt werden kann. Durch die Ansteuerung des Elektromotors über einen Strombegrenzer wird nämlich die Klemmkraft des Greifers bzw. dessen Backen eingestellt, und diese Einstellung erfolgt erfindungsgemäß entsprechend dem Gewicht des zu erfassenden bzw. aus dem Lagersystem zu entnehmenden Gegenstandes. Dadurch werden Schäden an kleinen und leichten zu erfassenden Gegenständen durch eine zu hohe Klemmkraft vermieden - denn diese werden nur mit einer geringen Klemmkraft gegriffen. Andererseits wird die Klemmkraft bei schweren Gegenständen ausreichend hoch gewählt, um ein sicheres Halten und Bewegen des Gegenstandes sicherzustellen. Damit können auch schwere Gegenstände schnell bewegt werden, ohne leichte Gegenstände zu beschädigen.

Erfindungsgemäß ist weiters vorgesehen, das Gewicht eines jeden in das Lagersystem eingebrachten Gegenstandes bei dessen Einbringung zu erfassen und dem jeweiligen Gegenstand zugeordnet abzuspeichern. Das Gewicht beim Einlagern festzustellen hat zunächst den Vorteil, dass damit falsch erfasste Gegenstände oder manipulierte Gegenstände auffallen, denn es ist bei jedem Gegenstand, nachdem er erfasst wurde, das Sollgewicht bekannt. Da beim Einlagern der Gegenstand üblicher Weise erst über Fördermittel zu einer Position gebracht wird, wo er vom Greifer gegriffen werden kann, steht vor dem Ergreifen durch den Greifer genug Zeit für eine Wägung zur Verfügung. Der Greifer, der idR den größten Zeitbedarf hat und damit die Geschwindigkeit des Lagersystems bestimmt, wird durch die Wägung also beim Einlagern nicht verzögert. Aber selbst wenn durch die Wägung das Einlagern verzögert würde, störte dies erheblich weniger als bei der Entnahme, da beim Einlagern keine Kunden warten müssen. Bei der Entnahme des jeweiligen Gegenstandes kann dessen vorher festgestelltes Gewicht abgefragt und die Klemmkraft des Greifers mittels einer entsprechenden Begrenzung des dem Linearmotor zugeführten Stroms eingestellt werden. Beim Verkauf, wo der Kunde wartet, steht das Gewicht also bereits zur Verfügung, sodass die Entnahme sehr schnell erfolgen kann.

Unter "Strombegrenzer" wird natürlich jede beliebige Schaltung verstanden, die den maximalen Strom begrenzt; meist wird man den Strombegrenzer durch einen Leistungsverstärker mit eingebauter Strombegrenzung realisieren.

Durch die Merkmale des Anspruchs 2 ergibt sich der Vorteil einer einfachen Konstruktion. Außerdem kann die Positionierung des Greifers durch Abgleich der Lage der festen Backe mit einem Anschlag erfolgen, an dem der zu entnehmende Gegenstand anliegt. Die Verwendung eines Linearmotors hat den Vorteil, dass kein Getriebe notwendig ist, sodass die durch den Strombegrenzer vorgegebene Kraft des Motors ohne Verluste auf den verschiebbaren Backen wirkt; bzw. umgekehrt wirkt sich ein Widerstand beim Klemmen viel deutlicher auf den Stromverbrauch des Motors aus. M.a.W.: die durch den Strombegrenzer vorgegebene Klemmkraft ist bei einem getriebelosen Linearmotor ganz erheblich besser reproduzierbar als bei einem herkömmlichen Elektromotor mit Getriebe.

Es ist zweckmäßig, wenn die Backen eine raue, schmirgelpapierartige Oberfläche aufweisen. Dadurch können Packungen einerseits sicher gegriffen werden, andererseits aber auch wieder sicher freigegeben werden. Andere Materialien, wie z.B. Gummi, erfüllen die zweite Aufgabe nicht zuverlässig, an Gummi bleiben leichte Packungen manchmal haften.

Es ist zweckmäßig, bei einem erfindungsgemäßen Lagersystem die Merkmale des Anspruchs 4 vorzusehen. Auf diese Weise werden alle eingelagerten Produkte durch die Schwerkraft fixiert: sie rutschen automatisch nach hinten gegen das Ausziehregal, weil ja das ganze Regal gegenüber der Vertikalen geneigt ist; und sie rutschen entlang der Fächer gegen die Anschläge, weil ja auch die Fächer schräg nach unten geneigt verlaufen. Damit kommt es nicht darauf an, wo genau beim Einlagern der Gegenstand platziert wird, er rutscht automatisch an seine Sollposition und kann somit nachher sicher gegriffen werden.

### Kurze Beschreibung der Abbildungen der Zeichnungen

Die Erfindung wird nun anhand der Zeichnungen näher erläutert. Es zeigt:

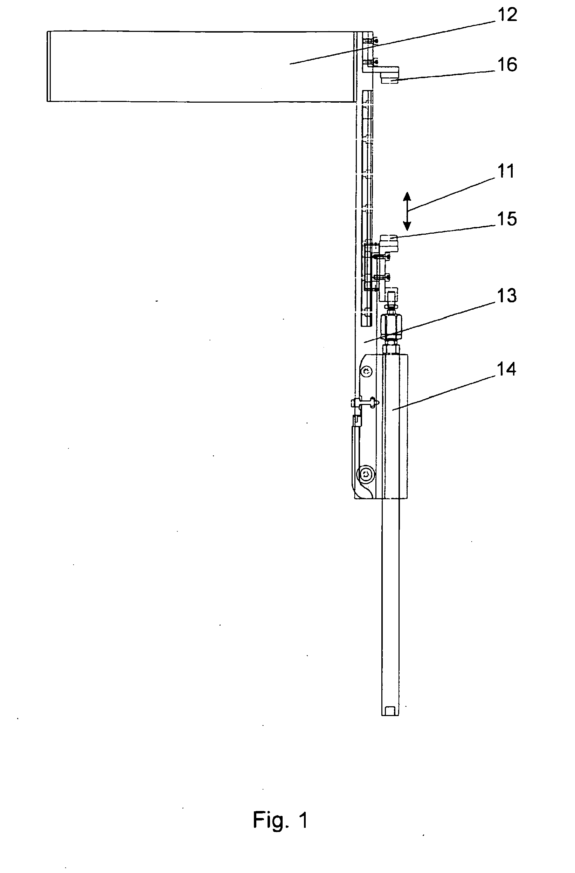

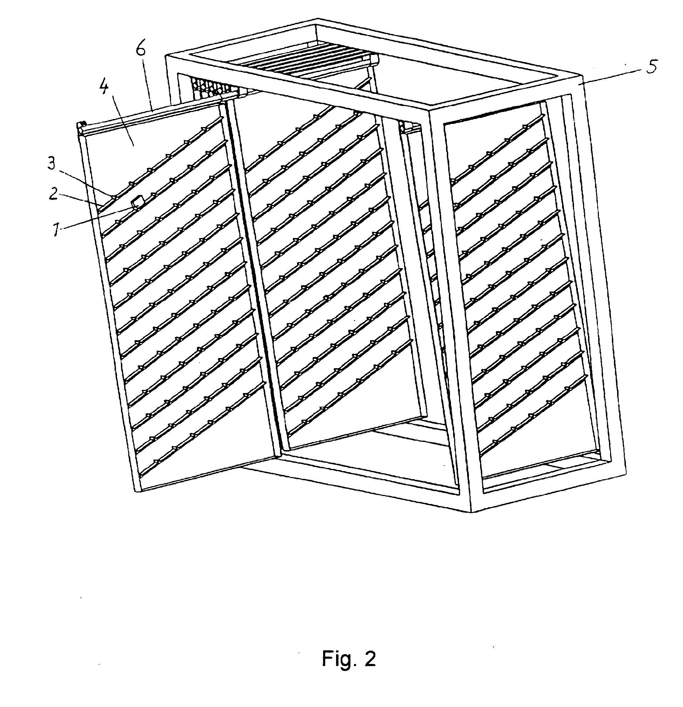

Fig. 1 schematisch ein erfindungsgemäßes Greifsystem und Fig. 2 ein Lagersystem, wo dieses Greifsystem zum Einsatz kommen kann.

### Bester Weg zur Ausführung der Erfindung

Das dargestellte Greifsystem weist einen in alle Raumrichtungen verschiebbaren Träger 12 auf, der seinerseits einen im Wesentlichen senkrecht abstehenden Greifarm 13 hält. Auf diesem ist ein Linearmotor 14 gehalten, der eine bewegliche Backe 15 betätigt. Diese Backe 15 ist in Richtung des Doppelpfeils 11 bewegbar.

Weiters ist auf dem Greifarm 13 eine feste Backe 16 befestigt. Durch entsprechende Betätigung der beweglichen Backe 15 wird der Abstand zwischen den Backen 15 und 16 entsprechend vermindert, wodurch ein aus einer Lageranordnung (nicht dargestellt) zu entnehmender Gegenstand entsprechend geklemmt wird und weiter gehandhabt werden kann.

Angesteuert wird der Linearmotor 14 über einen Strombegrenzer (nicht dargestellt), der den elektrischen Strom für den Linearmotor 14 entsprechend dem Gewicht des zu entnehmenden Gegenstandes begrenzt, wodurch die Klemmkraft der beiden Backen 15, 16 eingestellt wird. Sobald die Bewegung des Linearmotors 14 durch den zu greifenden Gegenstand blockiert wird, steigt nämlich der Strom stark an, und die Höhe des Stroms, der dann - vom Strombegrenzer vorgegeben - fließt, bestimmt unmittelbar die Haltekraft.

Ein Linearmotor 14 mit entsprechender Begrenzung des Stroms wirkt dabei wie eine Feder mit variabler Zug- oder Druckkraft bzw. wie eine Feder, deren Haltepunkt veränderbar ist.

Das Lagersystem weist ein Regalgestell 5 aus Profilrahmen auf. In diesem Regalgestell 5 sind Ausziehregale 4 auf Schienen befestigt. Die Schienen sind dabei so angeordnet, dass die Ausziehregale 4 gegenüber einer Vertikalen geneigt sind. Auf den Ausziehregalen 4 sind Fächer 2 angeordnet, was durch eine Blechkonstruktion verwirklicht sein kann. Diese Fächer 2 sind ebenfalls geneigt angeordnet. Diese Fächer 2 weisen Anschläge 3 auf, die durch einfaches Aufbiegen der Blechkonstruktion realisiert sein können. Dadurch ergibt sich in alle drei Richtungen des Raums eine Schräglage, sodass jedes Produkt 1 mit Hilfe der Schwerkraft fixiert ist, d.h. in seine Sollposition rutscht. Um den Lagerraum optimal zu nützen, ist es natürlich sinnvoll, Ausziehregale mit unterschiedlichen Größen für die einzulagernden Produkte vorzusehen. Bei Apotheken kommt man oft mit drei unterschiedlichen Größen aus.

Bei der Einbringung eines Gegenstandes in eine Lageranordnung wird dieser z.B. mittels einer Scannung eines Barcodes identifiziert und in einer Wägezelle (nicht dargestellt) dessen Gewicht ermittelt. Eine große Genauigkeit ist natürlich nicht notwendig. Verwendet werden kann z.B. ein Dehnmessstreifen mit Blechtafel als Messauflage.

Dabei kann auch eine Vermessung der Größe der einzelnen Gegenstände erfolgen, die in die Lageranordnung eingebracht werden sollen, damit die Gegenstände jeweils in das Ausziehregal mit der geringsten notwendigen Größe eingelagert werden können. Diese Daten, insbesondere das Gewicht, werden in einer nicht dargestellten Steuerung gespeichert, wie auch der Ort, an dem der Gegenstand in der Lageranordnung abgelegt wird.

Zur Entnahme des Gegenstandes aus der Lageranordnung wird das entsprechende Ausziehregal 4 ausgeschoben und der Träger 12 in eine entsprechende Lage verfahren. Weiters wird die feste Backe 16 zu dem zu entnehmenden Gegenstand gebracht und die bewegliche Backe 15 in einen Abstand von der festen Backe 16 gebracht, der etwas größer als der zu erfassende Gegenstand ist. Anschließend wird der Linearmotor 14 betätigt und die bewegliche Backe 15 gegen die feste Backe 16 bewegt. Sobald der zu entnehmende Gegenstand geklemmt ist, steigt der Strom an, bis er vom Strombegrenzer limitiert wird. Da der Strom, den der Strombegrenzer vorgibt, vom Gewicht des Gegenstandes abhängig ist, wird der Gegenstand mit einer dem Gewicht des zu entnehmenden Gegenstandes entsprechenden Kraft geklemmt. Die Klemmkraft ist umso höher, je schwerer der Gegenstand ist, sodass auch schwere Gegenstände sicher geklemmt und rasch bewegt werden können. Der Gegenstand kann nun durch entsprechende Verschiebung des Trägers 12 angehoben, aus dem Regal gezogen und weiter bewegt werden.

## Patentansprüche

1. Lagersystem, das mit einem Greifsystem ausgerüstet ist, welches ein einen Greifer haltendes Trägersystem aufweist, das zumindest entlang einer Achse verschiebbar ist, wobei der Greifer zwei gegeneinander verschiebbare Backen (15, 16) aufweist, die mittels eines Elektromotors (14) bewegbar sind, und wobei der Elektromotor (14) zur Festlegung der maximalen Greifkraft über einen Strombegrenzer ansteuerbar ist, **dadurch gekennzeichnet, dass** der Strombegrenzer den Strom in Abhängigkeit vom Gewicht des zu erfassenden Gegenstandes begrenzt und dass mit steigendem Gewicht des zu greifenden Gegenstandes der vom Strombegrenzer vorgegebene maximale Strom steigt, dass bei dem Lagersystem die einzulagernden Gegenstände vor dem Einlagern, z.B. mittels eines Codes, erfasst und deren Lagerplätze festgelegt werden und in einer Steuerung gespeichert werden, sodass die zu lagernden Gegenstände eine vorbestimmte Lage vor der Entnahme einnehmen, und dass eine Wägezelle zum Erfassen des Gewichts eines jeden einzulagernden Gegenstandes vorgesehen ist, die mit der Steuerung verbunden ist, die das jeweilig erfasste Gewicht dem betreffenden Gegenstand zuordnet und abspeichert, sodass dieses Gewicht zur Festlegung des maximalen Stroms bei der Entnahme bereits zur Verfügung steht.

2. Lagersystem nach Anspruch 1, **dadurch gekennzeichnet, dass** ein feststehender Backen (16) und ein verschiebbarer Backen (15), der mittels des als Linearmotor (14) ausgebildeten Elektromotors gegen den feststehenden Backen (16) verschiebbar ist, vorgesehen sind.

3. Lagersystem nach Anspruch 1 oder 2, **dadurch gekennzeichnet, dass** die Backen eine raue, schmirgelpapierartige Oberfläche aufweisen.

4. Lagersystem nach einem der Ansprüche 1 bis 3, **dadurch gekennzeichnet, dass** nebeneinander angeordnete, auf Laufschienen aus einem Regalgestell (5) herausziehbare Ausziehregale (4) vorgesehen sind, die in einer gegen die Vertikale geneigten Ebene verlaufen, und dass an den Ausziehregalen (4) übereinander angeordnete, schräg nach unten geneigt verlaufende Fächer (2) vorgesehen sind, an denen in regelmäßigen Abständen Anschläge (3) angeordnet sind.

## Claims

1. A storage system that is equipped with a gripping system which has a carrier system that holds a gripper and can be displaced at least along an axis, wherein the gripper has two jaws (15, 16) which can be displaced in relation to each other and are movable by means of an electric motor (14), and wherein the electric motor (14) can be activated in order to fix the maximum gripping force by way of a current limiter, **characterised in that** the current limiter limits the current as a function of the weight of the object that is to be picked up, and **in that** with increasing weight of the object that is to be gripped the maximum current that is preset by the current limiter increases, **in that** in the storage system the objects that are to be stored are picked up prior to storage, for example by means of a code, and their storage places are fixed and stored in a control so that the objects that are to be stored occupy a predetetermined position prior to removal, and **in that** provided to pick up the weight of each object that is to be stored there is a weighing cell that is connected to the control which associates with the object concerned and stores the weight that is picked up in each case so that this weight is already available to fix the maximum current upon removal.

2. A storage system according to claim 1, **characterised in that** a fixed jaw (16) and a displaceable jaw (15), which can be displaced towards the fixed jaw (16) by means of the electric motor formed as a linear motor (14), are provided.

3. A storage system according to claim 1 or 2, **characterised in that** the jaws have a rough surface like emery paper.

4. A storage system according to one of claims 1 to 3, **characterised in that** pull-out racks (4) are provided that are arranged side by side, can be pulled out of a rack frame (5) on runners and extend in a plane that is inclined with respect to the vertical, and **in that** provided on the pull-out racks (4) there are compartments (2) that are arranged one above the other and extend obliquely downwards in an inclined manner and on which stops (3) are arranged at regular intervals.

## Revendications

1. Système de stockage équipé d'un système de préhension comportant un système porteur pour un outil de préhension, ce dernier système pouvant être déplacé le long d'au moins un axe, ledit outil de préhension comportant deux mâchoires (15, 16) pouvant être décalées l'une par rapport à l'autre qui sont aptes à être déplacées au moyen d'un moteur électrique (14), et le moteur électrique (14) pouvant être commandé à travers un limiteur d'intensité afin de définir la force maximale de préhension, **caractérisé en ce que** ledit limiteur d'intensité limite le courant en fonction du poids de l'objet à saisir et que le courant maximal fourni par le limiteur d'intensité augmente avec l'augmentation du poids de l'objet à saisir, que les objets à stocker sont, dans la cadre dudit système de stockage, enregistrés préalablement à leur stockage, par exemple au moyen d'un code, et leurs emplacements de stockage sont définis et mémorisés dans un dispositif de commande, de façon à que les objets à stocker occupent, avant la sortie, une position préalablement définie et qu'une cellule de pesage est prévue pour enregistrer le poids de chacun des objets à stocker et reliée avec ledit dispositif de commande qui associe chaque poids enregistré avec l'objet concerné et le met en mémoire, de façon à ce que ledit poids soit déjà disponible, au moment de la sortie, pour définir le courant maximal.

2. Système de stockage selon la revendication 1, **caractérisé en ce qu'**il est pourvu d'une mâchoire fixe (16) et d'une mâchoire décalable (15) pouvant être décalée par rapport à la mâchoire fixe (16) au moyen d'un moteur électrique réalisé sous forme d'un moteur linéaire (14).

3. Système de stockage selon les revendications 1 ou 2, **caractérisé en ce que** lesdites mâchoires présentent une surface rugueuse, rappelant une feuille abrasive.

4. Système de stockage selon l'une des revendications 1 à 3, **caractérisé en ce qu'**il est pourvu d'étagères coulissantes (4) disposées les unes à côté des autres qui peuvent être extraites, sur des glissières, d'un support d'étagère (5), leur plan d'étendue étant incliné par rapport à la a verticale, et que les étagères coulissantes (4) sont pourvues de bacs (2) superposés dont l'étendue est inclinée vers le bas et sur lesquels sont disposées, à des distances régulières, des butées (3).
